Europäisches Patentamt

European Patent Office

Office européen des brevets

(11) Veröffentlichungsnummer: **0 226 853 B1**

(12) **EUROPÄISCHE PATENTSCHRIFT**

(45) Veröffentlichungstag der Patentschrift: **22.04.92**

(21) Anmeldenummer: **86116366.5**

(22) Anmeldetag: **25.11.86**

(51) Int. Cl.⁵: **H04B 10/06**

(54) **Optischer Empfänger.**

(30) Priorität: **16.12.85 DE 3544442**

(43) Veröffentlichungstag der Anmeldung:
**01.07.87 Patentblatt 87/27**

(45) Bekanntmachung des Hinweises auf die
Patenterteilung:
**22.04.92 Patentblatt 92/17**

(84) Benannte Vertragsstaaten:
**AT BE CH DE FR GB IT LI NL SE**

(56) Entgegenhaltungen:

**ELECTRONIC DESIGN, Band 27, Nr. 21, 11.
Oktober 1979, Seiten 29-30, Rochelle Park,
US; D. MENNIE: "Fiber-optics detector and
amp on one chip fight RFI and EMI"**

**NAECON 1981, PROCEEDINGS OF THE IEEE
1981 NATIONAL AEROSPACE AND ELECTRO-
NICS CONFERENCE, Dayton, 19.-20. Mai 1981,
Band 3, Seiten 1319-1323, IEEE, New York,
US; D.R. PORTER et al.: "Optical data bus
receiver for MIL-STD-1553B"**

**PATENT ABSTRACTS OF JAPAN, Band 9, Nr.
136 (E-320)[1859], 12. Juni 1985; & JP-A-60 20
654**

(73) Patentinhaber: **SIEMENS AKTIENGESELL-
SCHAFT
Wittelsbacherplatz 2
W-8000 München 2(DE)**

(72) Erfinder: **Goerne, Jan, Dipl.-Ing.
Heinrich Voglstrasse 8
W-8000 München 71(DE)**

**Beschreibung**

Die Erfindung betrifft einen optischen Empfänger mit einer PIN-Fotodiode als Empfangsorgan für optische Signale einer faseroptischen Nachrichtenübertragungsstrekke und einem nachgeschalteten Transimpedanzverstärker zur Umwandlung des von der PIN-Fotodiode abgegebenen Fotostroms in eine auswertbare Spannung.

Das Prinzip eines derart aufgebauten optischen Empfängers ist z.B. aus dem Aufsatz "Grundlagen der elektrooptischen Signalübertragung" in telcom report 6 (1983), Beiheft "Nachrichtenübertragung mit Licht", Seiten 21 bis 27, sowie aus Electronic Design, Band 27, Nr. 21, 11.10.79, Rochelle Park, US; D. MENNIE:" Fiber-optics detector and amp on one chip fight RFI and EMI bekannt. Derart aufgebaute optische Empfänger sind in vielen Varianten auf dem Markt. Es gibt sehr teure komplette optische Empfänger mit hoher Empfindlichkeit. Daneben gibt es optische Empfänger, die als Vorverstärker mit kleiner Verstärkung ausgebildet sind, und bei denen es einen erheblichen Aufwand erfordert, um zu einem auswertbaren Signal zu kommen, insbesondere bei optischen Impulsen mit einer hohen Bitrate. Alle auf dem Markt angebotenen optischen Empfänger bilden eine bauliche Einheit mit einem daran angepaßten Steckertyp. Eine Anpassung an andere Steckertypen ist mit erheblichen zusätzlichen Kosten verbunden. Ein weiterer Nachteil der bekannten optischen Empfänger besteht darin, daß zur Vermeidung von Driftproblemen in den Empfängern eine wechselstrommäßige Kopplung bevorzugt wird. Eine wechselstrommäßige Kopplung zwischen den einzelnen Empfängerstufen ist aber für einen Datenverkehr mit Ruhezustand von Nachteil, da es zu unerwünschten Einschwingzuständen kommen kann.

Die Aufgabe der vorliegenden Erfindung besteht darin, einen optischen Empfänger der eingangs genannten Art anzugeben, der universell einsetzbar ist und preisgünstig herstellbar ist.

Diese Aufgabe wird erfindungsgemäß für einen optischen Empfänger der oben genannten Art dadurch gelöst, daß der Transimpedanzverstärker als symmetrisch aufgebauter ECL-Operationsverstärker mit zwei komplementären Ausgängen ausgebildet ist, der außer einem Gegenkopplungszweig einen zusätzlichen negativen Rückkopplungszweig aufweist, und daß dem Transimpedanzverstärker zwei Spannungsverstärker, die ebenfalls als symmetrisch aufgebaute ECL-Operationsverstärker mit zwei komplementären Ausgängen ausgebildet sind, nachgeschaltet sind, wobei der negative Ausgang des zweiten Spannungsverstärkers über einen Rückkopplungszweig auf den nicht negierten Eingang des Transimpedanzverstärkers geführt ist.

Der erfindungsgemäße optische Empfänger ist, unabhängig vom Steckertyp, universell einsetzbar, da er mit diesem keine Einheit bildet. Er besteht aus handelsüblichen ECL-Bausteinen und ist damit preiswert herstellbar. Die Kopplung zwischen den einzelnen Stufen erfolgt gleichstrommäßig, so daß sich ein großer Vorteil für einen Datenverkehr mit Pausen zwischen den einzelnen Datenpaketen ergibt. Aufgrund der negativen Rückkopplung treten bei dem erfindungsgemäßen optischen Empfänger keine Driftprobleme auf

Eine vorteilhafte Ausgestaltung des optischen Empfängers gemäß der vorliegenden Erfindung ist dadurch gekennzeichnet, daß der negative Ausgang des ersten Spannungsverstärkers über eine Diode, die im Ruhezustand des Empfängers gesperrt ist, mit dem nicht negierten Eingang des Transimpedanzverstärkes verbunden ist.

Dadurch wird erreicht, daß der negative Rückkopplungskreis des ersten Spannungsverstärkes nur bei größeren optischen Signalen wirksam wird, wodurch die Dynamik des optischen Empfängers vergrößert wird.

weitere vorteilhafte Ausgestaltungen des optischen Empfänges gemäß der vorliegenden Erfindung ergeben sich aus den Unteransprüchen sowie aus der Beschreibung eines Ausführungsbeispieles.

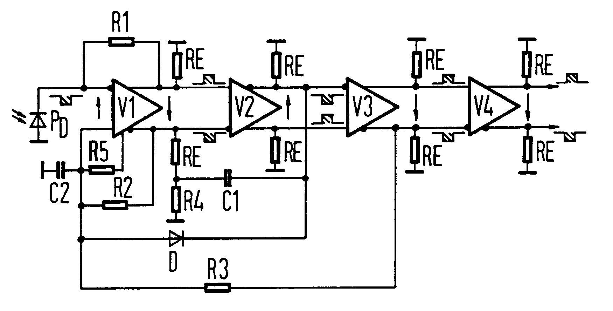

Im folgenden soll der erfindungsgemäße optische Empfänger anhand eines in der Figur dargestellten Ausführungsbeispieles näher beschrieben werden.

Der erfindungsgemäße optische Epfänger besteht im wesentlichen aus der PIN-Fotodiode PD und vier hintereinander geschalteten Verstärkern V1 bis V4. Bei den Verstärkern V1 bis V4 handelt es sich um symmetrisch aufgebaute ECL-Operationsverstärker mit zwei komplementären Ausgängen. Vorgegeben durch die ECL-Technik ist jeder Ausgang der Verstärker mit einem Emitterwiderstand RE gegen Massepotential geschaltet.

Die eintreffenden Lichtsignale werden von der Fotodiode PD in einen Fotostrom umgewandelt, welcher vom ersten Verstärker V1, der als Transimpedanzverstärker arbeitet, in eine entsprechende Spannung umgesetzt wird, die dann zur weiteren Verstärkung durch die Verstärker V2 bis V4 zur Verfügung steht. Während der Verstärker V1 mit dem im Gegenkopplungszweig liegenden Widerstand R1 als Transimpedanzverstärker mit möglichst geringem Eingangswiderstand arbeitet, handelt es sich bei den Verstärkern V2 und V3 um reine Spannungsverstärker. Der Verstärker V4 sorgt zwar auch noch für eine zusätzliche Spannungsverstärkung, jedoch dient er, da er als Komparator geschaltet ist, in erster Linie als Auswertungsstufe des optischen Empfängers.

Die Kopplung zwischen den einzelnen Verstärkern des optischen Empfängers erfolgt gleichstrommäßig, da jeder Ausgang eines Verstärkers jeweils direkt mit dem Eingang des folgenden Verstärkers verbunden ist. Das auszuwertende Nutzsignal wird dem negierten Eingang des Verstärkers V1 zugeführt. Zur Festlegung der Arbeitspunkte des Transimpedanzverstärkers V1 ist der nicht negierte Eingang über den Widerstand R5 mit der Referenzspannungsquelle des Transimpedanzverstärkers V1 verbunden. Der negative Ausgang des Verstärkers V1 ist über den Widerstand R2 mit dem nicht negierten Eingang des Widerstandes V1 verbunden, so daß sich eine negative Rückkopplung ergibt. Weiterhin ist der negative Ausgang des Verstärkers V3 über den Widerstand R3 mit dem nicht negierten Eingang des Transimpedanzverstärkers V1 verbunden. Durch diese beiden negativen Rückkopplungszweige mit den Widerständen R2 und R3 wird erreicht, daß die Ausgänge des Spannungsverstärkers V3 im Bereich des ECL-Pegels liegen und die Wirkung der Offsetspannung reduziert wird.

Der negative Ausgang des Spannungsverstärkers V2 ist über die Diode D mit dem nicht negierten Eingang des Transimpedanzversträekrs V1 verbunden. Diese Verbindung bildet den dritten negativen Rückkopplungszweig. Dieser Rückkopplungszweig mit der Diode D wird aber erst bei großen optischen Signalen wirksam. Durch die positive Rückkopplung zwischen dem negativen Ausgang des Spannungsverstärkers V2 und dem negierten Eingang dieses Spannungsverstärkers über den Kondensator C1 und den Emitterwiderstand RE in Verbindung mit dem Widerstand R4, dessen Widerstandswert bis zum Faktor 10 größer ist als der Widerstandswert des Emitterwiderstandes RE, wird die gewünschte Polarität am Ausgang des Spannungsverstärkers V2 bestimmt. Durch diesen positiven Rückkopplungszweig wird nämlich erreicht, daß im Ruhezustand des optischen Empfängers der absolute Spannungswert am negativen Ausgang des Spannungsverstärkers V2 größer ist als der absolute Wert der Spannung am nicht negativen Ausgang des Spannungsverstärkers V2. Auf diese Weise ist der Ruhezustand eindeutig definiert, so daß die Diode D im Ruhezustand des optischen Empfängers gesperrt ist. Der positive Rückkopplungszweig ist so ausgelegt, daß die Diode D auch für kleine optische Signale gesperrt bleibt.

Daraus ergibt sich, daß eine Regelung der Ausgangsspannungen bei kleinen optischen Signalen lediglich über die negativen Rückkopplungszweige mit den Widerständen R2 und R3 erfolgt, und erst bei großen optischen Signalen die Regelung mittels des dritten negativen Rückkopplungszweiges mit der Diode D greift, um zu verhindern, daß die Ausgangsspannungen außerhalb des Arbeitsbereiches der Operationsverstärker liegen.

Der Kondensator C1 dient im wesentlichen zum Ausgleich der Kapazität der Diode D und des erhöhten Widerstandes R4 und verbessert damit die Eigenschaften des Verstärkers im Bereich der hohen Bitraten, da er die Anstiegszeit des gesamten optischen Empfängers verbessert. Ebenfalls zur Verbesserung der Eigenschaften des optischen Empfänges im Bereich der hohen Frequenzen dient der Kondensator C2, der als Entkopplungsglied für steile Impulsflanken innerhalb der negativen Rückkopplungszweige dient.

Um den Eingangsoffsetstrom des Transimpedanzverstärkers V1 möglichst gering zu halten, sind die Widerstände R1, R2, R3 und R5 so dimensioniert, daß der Gesamtwiderstandswert der Parallelschaltung der Widerstände R2, R3 und R5 ungefähr gleich dem Widerstandswert des Gegenkopplungswiderstandes R1 ist.

Bezugszeichenliste

| | |
|---|---|
| V1 | Verstärker |
| V2 | Verstärker |
| V3 | Verstärker |
| V4 | Verstärker |
| PD | Fotodiode |
| R1 | Widerstand |
| R2 | Widerstand |
| R3 | Widerstand |
| R4 | Widerstand |
| RE | Emitterwiderstand |
| D | Diode |
| C1 | Kondensator |
| C2 | Kondensator |

**Patentansprüche**

1. Optischer Empfänger mit einer PIN-Fotodiode als Empfangsorgan für optische Signale einer faseroptischen Nachrichtenübertragungsstrecke und einem nachgeschalteten Transimpedanzverstärker zur Umwandlung des von der PIN-Fotodiode abgegebenen Fotostroms in eine auswertbare Spannung, **dadurch gekennzeichnet,** daß der Transimpedanzverstärker (V1) als symmetrisch aufgebauter ECL-Operationsverstärker mit zwei komplementären Ausgängen ausgebildet ist, der außer einem Gegenkopplungszweig (R1) einen zusätzlichen negativen Rückkopplungszweig (R2) aufweist, und daß dem Transimpedanzverstärker (V1) zwei Spannungsverstärker (V2, V3), die ebenfalls als symmetrisch aufgebaute ECL-Operationsverstärker mit zwei komplementären Ausgängen ausgebildet sind, nachgeschaltet sind, wobei der negative Ausgang des zweiten Spannungsverstärkers (V3) über einen Rückkopplungszweig (R3) auf den nicht negierten Eingang des Transimpedanzverstärkers (V1) geführt ist.

2. Optischer Empfänger nach Anspruch 1, **dadurch gekennzeichnet,** daß der negative Ausgang des esten Spannungsverstärkers (V2) über eine Diode (D), die im Ruhezustand des Empfängers gesperrt ist, mit dem nicht negierten Eingang des Transinmpedanzverstärkers (V1) verbunden ist.

3. Optischer Empfänger nach Anspruch 1 und 2, **dadurch gekennzeichnet,** daß der negative Ausgang des ersten Spannungsverstärkers (V2) über einen Kondensator (C1) und einen an die Eingangsleitung des negierten Eingangs des ersten Spannungsverstärkers (V2) geschalteten Emitterwiderstand (RE) mit diesem Eingang verbunden ist, wobei der Emitterwiderstand (RE) Teil eines Spannungsteilers ist , dessen zweiter Widerstand (R4) mit Massepotential verbunden ist und einen bis zum Faktor 10 größeren Widerstandswert aufweist als der Emitterwiderstand (RE)

4. Optischer Empfänger nach Anspruch 1, **dadurch gekennzeichnet,** daß der nicht negierte Eingang des Transimpedanzverstärkers (V1) über einen Kondensator (C2) mit Erdpotential verbunden ist.

5. Optischer Empfänger nach Anspruch 1, **dadurch gekennzeichnet,** daß der nicht negierte Eingang des Transimpedanzverstärkers (V1) über einen Widerstand (R5) mit der Referenzspannungsquelle des Transimpedanzverstärkers (V1) verbunden ist.

6. Optischer Empfänger nach Anspruch 1, **dadurch gekennzeichnet,** daß dem zweiten Spannungsverstärker (V3) ein als Komparator wirkender symmetrisch aufgebauter ECL-Operationsverstärker (V4) mit zwei komplementären Ausgängen nachgeschaltet ist, der als Auswertungsstufe dient

## Claims

1. Optical receiver comprising a PIN photodiode as receiving element for optical signals of a fibre-optic communications transmission link, and a downstream transimpedance amplifier for converting the photocurrent output by the PIN photodiode into an evaluatable voltage, characterised in that the transimpedance amplifier (V1) is designed as a symmetrically constructed ECL operational amplifier having two complementary outputs, which apart from one degenerative feedback path (R1) has an additional negative feedback path (R2), and in that connected downstream of the transimpedance amplifier (V1) are two voltage amplifiers (V2, V3) which are likewise designed as symmetrically constructed ECL operational amplifiers having two complementary outputs, the negative output of the second voltage amplifier (V3) being led via a feedback path (R3) to the non-negated input of the transimpedance amplifier (V1).

2. Optical receiver according to Claim 1, characterised in that the negative output of the first voltage amplifier (V2) is connected to the non-negated input of the transimpedance amplifier (V1) via a diode (D) which is blocked in the unoperated condition of the receiver.

3. Optical receiver according to Claims 1 and 2, characterised in that the negative output of the first voltage amplifier (V2) is connected via a capacitor (C1) and an emitter resistor (RE) connected to the input line of the negated input of the first voltage amplifier (V2) to said input, the emitter resistor (RE) being a part of a bleeder chain whose second resistor (R4) is connected to frame potential and has a resistance value larger by up to a factor of 10 than the emitter resistor (RE).

4. Optical receiver according to Claim 1, characterised in that the non-negated input of the transimpedance amplifier (V1) is connected via a capacitor (C2) to earth potential.

5. Optical receiver according to Claim 1, characterised in that the non-negated input of the transimpedance amplifier (V1) is connected via a resistor (R5) to the reference voltage source of the transimpedance amplifier (V1).

6. Optical receiver according to Claim 1, characterised in that a symmetrically constructed ECL operational amplifier (V4) having two complementary outputs, which acts as a comparator and serves as an evaluation stage is connected downstream of the second voltage amplifier (V3).

## Revendications

1. Récepteur optique comportant une photodiode PIN en tant qu'élément de réception pour des signaux optiques d'une section de transmission d'informations à fibre optique, et un amplificateur à transimpédance branché en aval et servant à convertir le courant photoélectrique délivré par la photodiode PIN en une tension pouvant être évaluée, caractérisé par le fait que l'amplificateur à transimpédance (V1) est réalisé sous la forme d'un amplificateur opérationnel ECL à constitution symétrique possédant deux sorties complémentaires et qui possède, en plus d'une branche de contre-réaction (R1), une branche de réaction négative supplémentaire (R2) et qu'en aval de l'amplificateur à transimpédance (V1) sont branchés deux amplificateurs de tension (V2,V3), qui sont également réalisés sous la forme d'amplificateurs opérationnels ECL à constitution symétrique comportant deux sorties complémentaires, la sortie négative du second amplificateur de tension (V3) étant raccordée par l'intermédiaire d'une branche de réaction (R3) à l'entrée non négativée de l'amplificateur à transimpédance (V1).

2. Récepteur optique suivant la revendication 1, caractérisé par le fait que la sortie négative du premier amplificateur de tension (V2) est raccordée par l'intermédiaire d'une diode (D), qui est bloquée lorsque le récepteur est au repos, à l'entrée non négativée d'un amplificateur à transimpédance (V1).

3. Récepteur optique suivant les revendications 1 et 2, caractérisé par le fait que la sortie négative du premier amplificateur de tension (V2) est raccordée par l'intermédiaire d'un condensateur (C1) et d'une résistance d'émetteur (RE), raccordée au conducteur d'entrée de l'entrée négativée du premier amplificateur de tension (V2), à cette entrée, la résistance d'émetteur (RE) faisant partie d'un diviseur de tension dont la seconde résistance (R4) est raccordée au potentiel de masse et possède une valeur résistive supérieure du facteur 10 à la résistance d'émetteur (RE).

4. Récepteur optique suivant la revendication 1, caractérisé par le fait que l'entrée non négativée de l'amplificateur à transimpédance (V1) est raccordée au potentiel de masse par l'intermédiaire d'un condensateur (C2).

5. Récepteur optique suivant la revendication 1, caractérisé par le fait que l'entrée non négativée de l'amplificateur à transimpédance (V1) est raccordé par l'intermédiaire d'une résistance (R5) à la source de tension de référence de l'amplificateur à transimpédance (V1).

6. Récepteur optique suivant la revendication 1, caractérisé par le fait qu'en aval du second amplificateur de tension (V3) est branché un amplificateur opérationnel ECL (V4), qui possède une constitution symétrique, qui agit en tant que comparateur, qui comporte deux sorties complémentaires et qui est utilisé en tant qu'étage d'évaluation.